(19) Europäisches Patentamt
European Patent Office
Office européen des brevets

(11) **EP 2 518 342 A1**

(12) **EUROPEAN PATENT APPLICATION**

(43) Date of publication:
**31.10.2012 Bulletin 2012/44**

(21) Application number: **11305498.5**

(22) Date of filing: **27.04.2011**

(51) Int Cl.:
**F16C 19/16** *(2006.01)*  **F16C 33/58** *(2006.01)*
**F16C 41/04** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Aktiebolaget SKF**
**41 550 Göteborg (SE)**

(72) Inventor: **Arnault, Benoît**
**37540 Saint Cyr sur Loire (FR)**

(74) Representative: **Myon, Gérard Jean-Pierre et al**
**Cabinet Lavoix**
**62, Rue de Bonnel**
**69448 Lyon Cedex 03 (FR)**

(54) **A ball bearing, its manufacturing process, a clutch thrust bearing device including such a bearing and a motor vehicle fitted with such a bearing or such a device**

(57) This ball bearing comprises an inner ring (3), an outer ring (4) and at least one series of balls (6) located in a raceway chamber (5) defined between the inner and outer rings. This bearing comprises an annular blocking member (8) partly received in a groove (44) formed in a surface (42) of a first ring (4) inside the raceway chamber (5). This blocking member (8) is away from the balls (6) under normal operating conditions of the bearing and it comes into contact with at least some of the balls (6) when a wrenching force (F2) parallel to a rotation axis (X2, X3, X4) of the bearing (1) is exerted on the inner and outer rings (3, 4).

Fig.3

EP 2 518 342 A1

**Description**

TECHNICAL FIELD OF THE INVENTION

This invention relates to a ball bearing and to a clutch thrust bearing device including such a bearing. The invention also relates to a motor vehicle fitted with such a bearing or such a device. Finally, the invention relates to a process for manufacturing such a bearing or such a clutch thrust bearing device.

BACKGROUND OF THE INVENTION

Ball bearings are sometimes used for transmitting an axial force, i.e. a force parallel to the central axis of the bearing. This applies, in particular, to clutch thrust bearing devices used in motor vehicles.
When a bearing has been mounted, it is important that it is not easily dismantled, insofar as a bearing is not always immediately mounted in a corresponding recess or on a corresponding shaft. Under such circumstances, the inner and outer rings of a bearing might be subjected to a wrenching or separation force which is parallel or partly parallel to the axes of rotation of the bearing.
Thus, there is a need for a ball bearing with an increased resistance to a wrenching force.

SUMMARY OF THE INVENTION

To this end, the invention concerns a ball bearing comprising an inner ring, an outer ring and at least one series of balls located in a raceway chamber defined between the inner and outer rings. According to the invention, this bearing comprises an annular blocking member partly received in a groove formed in a surface of a first ring, amongst the inner and outer rings, inside the raceway chamber. This blocking member is away from the balls under normal operating conditions of the bearing and it comes into contact with at least some of the balls when a wrenching force, parallel to a rotation axis of the inner and outer rings one with respect to the other, is exerted on the inner and outer rings.
Thanks to the invention, the blocking element prevents undesired dismantling of the bearing and avoids that some of the balls be lost and/or the raceways of the rings be damaged on this occasion.
According to further aspects of the invention which are advantageous but not compulsory, such a bearing may incorporate one or several of the following features, taken in any technically feasible combination:

- The groove has a section complementary or substantially complementary to the outer shape of the part of the blocking member which is received in this groove.
- The second ring, amongst the inner and outer rings, has a raceway for the balls and, when the blocking element is in contact with one ball, a diameter of this ball which crosses a contact point between this ball and the blocking member also crosses the raceway.
- When the blocking member is in contact with a ball, a first angle defined between, on the one hand, a diameter of the ball passing through a contact point between the blocking member and the ball and, on the other hand, a median plane of the series of balls, is smaller than a second angle defined between, on the one hand, the median plane and, on the other hand, a diameter of the ball passing on an edge of a raceway defined on the second ring for the balls. Alternatively, these first and second angles can be equal.
- The ratio between the first angle and the second angle is between 0,5 and 1,2.
- These first and second angles are each between 5° and 30°.
- The difference between the outer diameter of the series of balls and the inner diameter of the blocking member is less than half of the diameter of the balls.
- When the blocking member is in contact with a ball, the sum of a first clearance, between this ball and the corresponding raceway forming ball groove of a second ring, amongst the inner and outer rings, at the level of a median plane of the series of balls, and a second clearance, between said ball and a raceway forming surface of the first ring, at the level of the median plane, is smaller than a radial height of the ball groove at the level of the median plane.
- The above-mentioned sum of the first and second clearances is smaller than a distance between, on the one hand, a contact point of the blocking member and the ball and, on the other hand, the raceway forming surface of the first ring, at the level of the median plane.
- The blocking member is a circlip, a snap ring or an elastic washer. Alternatively, it can be an O-ring or a seal.
- The blocking member is metallic. Alternatively, it can be made of a synthetic material.
- The inner ring and the outer ring are mounted with freedom to pivot angularly about a point common to the axes of symmetry of the rings and the blocking member is adapted to come into contact with at least one of the balls via an angular pivoting movement of the rings, one with respect to the other.
- The bearing includes a sealing gasket mounted on one of the rings and extending up to the vicinity of, or in sliding contact with, the other ring, whereas this sealing gasket isolates the raceway chamber from the outside and the blocking member is located between the series of balls and the sealing gasket, along the axis of symmetry of the first ring.

The invention also provides a clutch thrust bearing device comprising a drive element and a bearing as mentioned here-above. Such a device is more resistant with respect to a wrenching force than the known devices.

The invention also concerns a motor vehicle fitted with a bearing or a clutch thrust bearing device as mentioned here-above. Such a vehicle is easier to maintain than prior art vehicles.

Finally, the invention concerns some processes for manufacturing a bearing or a clutch thrust bearing as mentioned here-above. In such processes, the groove is formed on the surface of the first ring by stamping or machining. Moreover, the balls are installed within the raceway chamber before the blocking member is engaged into the groove.

BRIEF DESCRIPTION OF THE DRAWINGS

The invention can be well understood and other advantages thereof appear more clearly in the light of the following description of one embodiment of a bearing and a clutch thrust bearing device in accordance with the principle of the invention, given purely by way of example and made with reference to the accompanying drawings in which:

- figure 1 is an axial section of a ball bearing in accordance with the invention under normal operating conditions,
- figure 2 is an enlarged view of detail II on figure 1,
- figure 3 is an enlarged view similar to figure 2 when the ball bearing is subjected to a wrenching force, and
- figure 4 is a schematic view, at a larger scale, of some components of the ball bearing in the configuration of figure 3.

DESCRIPTION OF SOME EMBODIMENTS

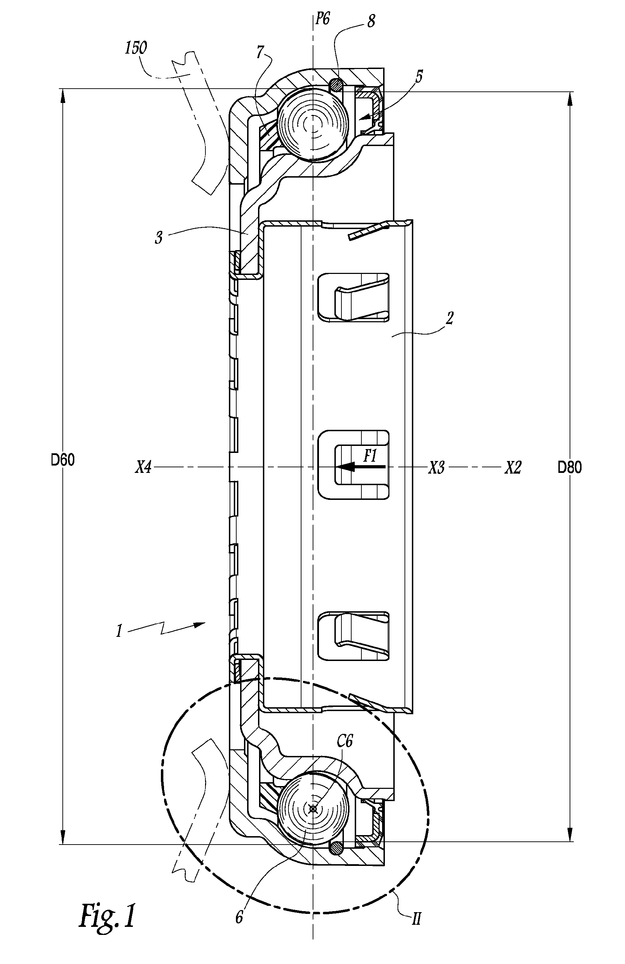

The bearing 1 shown on figures 1 to 3 belongs to a clutch thrust bearing device for a non-represented motor vehicle. The bearing 1 is associated with a metal sleeve 2 for fastening on a non represented piston connected to the output shaft of a gearbox. Bearing 1 and sleeve 2 form together a clutch thrust device. Metal sleeve 2 is centered on an axis X2 of bearing 1.

Bearing 1 comprises an inner or inside ring 3 and an outer or outside ring 4. A raceway chamber 5 is defined radially between rings 3 and 4 and receives a single series of balls 6 that are held in relative position by a cage 7 which is also located in chamber 5. Items 3, 4 and 6 are metallic, whereas cage 7 is made of a synthetic material.

The center plane of the balls 6, that is the plane that contains the respective centers points C6 of these balls, is referenced P6.

Outer ring 4 is in contact with a diaphragm 150 of a non-represented clutch mechanism which belongs to the automotive vehicle. This diaphragm is partly represented on the figures by its tips which are drawn in chain-dotted lines and form part of a conversional throughput mechanism.

Sleeve 2 enables a thrust force F1 to be exerted in alignment along axis X2.

The axes of symmetry of rings 3 and 4 are respectively referenced X3 and X4. In the mounted configuration of bearing 1, axes X3 and X4 coincide. Axis X4 constitutes the outlet axis of bearing 1. In the nominal utilization configuration of bearing 1 shown on figure 1, axes X2, X3 and X4 coincide.

Balls 6 simultaneously bear against an outside surface 32 of inner ring 3 and against an inside surface 42 of ring 4. More precisely, surface 32 defines a ball groove 34 with a generator line in the form of a circular arc of a radius substantially equal to the radius of the balls 6. Thus, the balls 6 are positioned axially relative to axis X3 and plane P6 is perpendicular to axis X3.

Ball groove 34 and surface 42 form respective raceways on rings 3 and 4 for balls 6.

A groove 44 is provided by stamping on surface 42. Alternatively, groove 44 can be obtained by machining of surface 42.

A toroidal circlip 8 is engaged within groove 44. Circlip 8 is made of a synthetic material.

A sealing gasket 9 is fixed on outer ring 4, next to groove 44. Sealing gasket 9 includes a metallic core 91 and an elastomeric body 92 which protrudes from core 91 in the form of a lip 93 in sliding contact with surface 32, next to ball groove 34. Alternatively, sealing 9 might have a portion which extends up to a small distance with respect to surface 32.

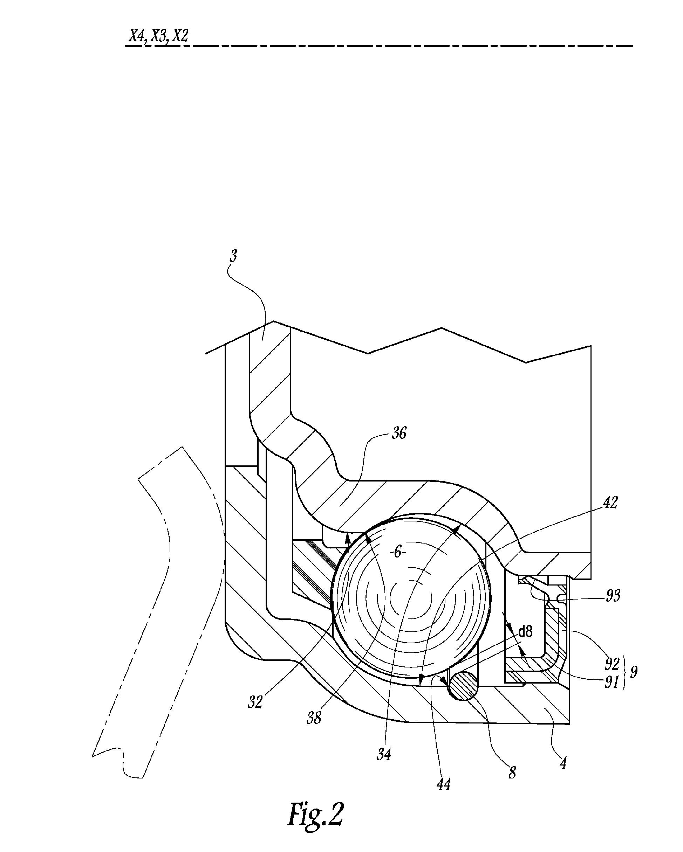

As shown on figure 2, under normal working conditions of bearing 1, circlip 8 is at a non-zero distance d8 from each ball 6. In other words, circlip 8 does not contact any of the balls 6.

If a wrenching or separation force F2 is exerted onto rings 3 and 4, in a direction parallel to axes X2, X3 and X4, ring 4 moves away from ring 3, to the extent that circlip 8 comes into contact with the balls 6. If the wrenching force F2 is parallel to axes X2, X3 and X4, circlip 8 comes into contact with all balls 6 at the same time. It is also possible that the wrenching force F2 is not parallel to axis X2. In such a case, this force has an axial component and a radial component with respect to axis X2. Then, circlip 8 might come into contact with some only of the balls 6. In such a case, the axial component of the wrenching force is a wrenching force which is parallel to axis X2.

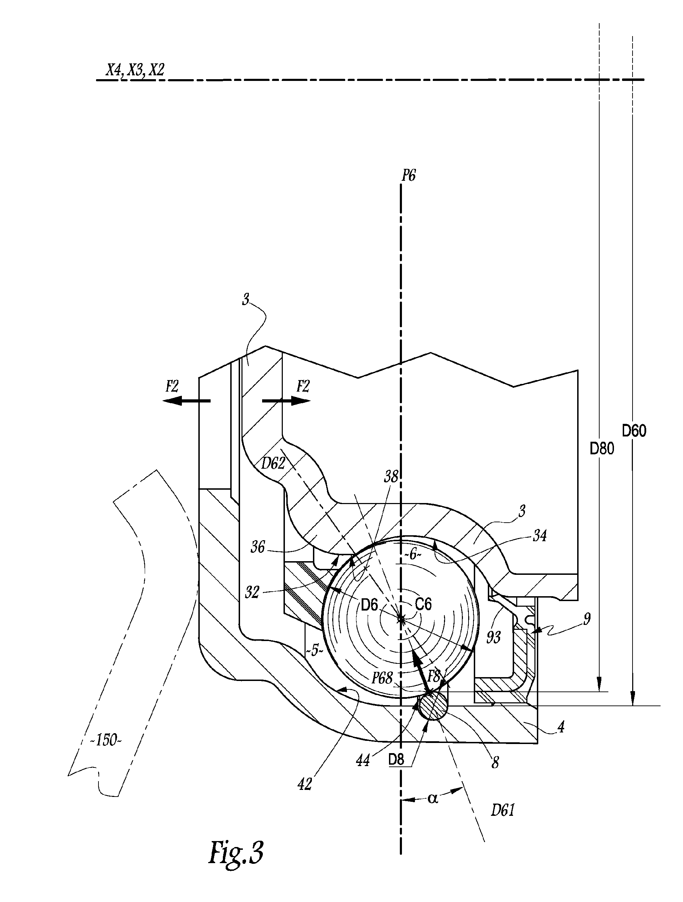

As shown on figure 3, when the circlip is in abutment against a ball 6, it blocks the movement of outer ring 4 to the left of figure 3, since circlip 8 is wedged against one side of groove 44 and cannot pass plane P6 in the direction of force F2.

This is due to the fact that balls 6 are blocked within ball groove 34 because a step 36 extends along ball groove 34 opposite to the part of surface 32 against which lip 93 comes into sliding contact.

In other words, in the mounted configuration of bearing 1, step 36 is opposite ball groove 34 with respect to plane P6.

P68 denotes the contact point between one ball 6 and circlip 8. From a mathematical point of view, zone P68 is a point. Actually, it is a surface with a very small area.

D61 denotes a first diameter of a ball 6 in the configuration of figure 3, this first diameter passing through contact point P68. $\alpha$ denotes the angle between plane P6 and diameter D61 in an angular sector oriented towards axes X2, X3 and X4 with respect to a center point C6 of ball 6.

D62 denotes a diameter of the same ball 6 which crosses the edge 38 of ball groove 34 along step 36. P63 denotes the contact point between ball 6 and edge 38. Diameter D62 passes through point P63. $\beta$ denotes the angle between plane P6 and diameter D62 in an angular sector oriented towards axes X2, X3 and X4 with respect to a center point C6 of ball 6.

b1 denotes the clearance between ball groove 34 and ball 6, at the level of plane P6.

b2 denotes the clearance between surface 42 and ball 6, at the level of plane P6.

H1 denotes the radial height of ball groove 34 on the side of step 36, with respect to plane P6. Height H1 is the distance, parallel to plane P6 between point P63 and the bottom of ball groove 34, at the level of plane P6.

d2 denotes the radial distance between contact point P68 and the projection of surface 42 at the level of circlip 8. In other words, distance d2 is the radial distance, measured parallely to plane P6, by which contact point P68 protrudes out of groove 44.

The sum of clearances b1 and b2 is smaller than height H1. In other words, the following equation is followed:

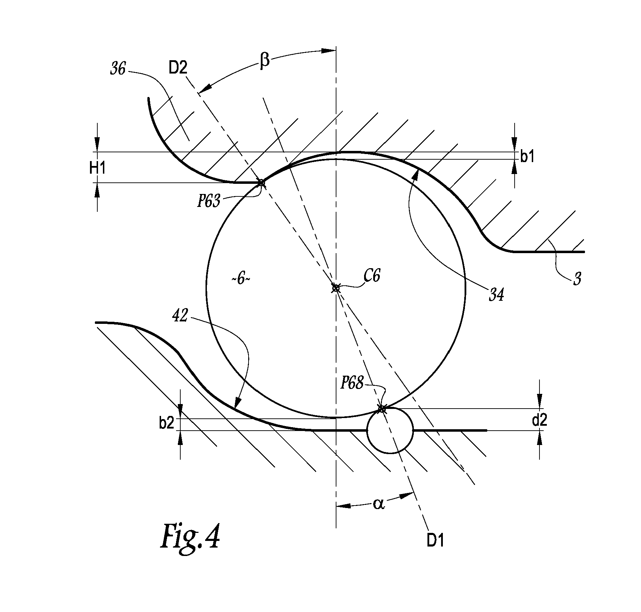

This relationship guarantees that, in the configuration of figures 3 and 4, ball 6 does not risk to skip over step 36.

Moreover, the sum of the above-mentioned clearances is also smaller than height d2. In other words, the following equation is followed:

This relationship guarantees that circlip 8 does not risk to skip over ball 6 when a contact occurs between items 6 and 8. This relationship guarantees that contact point P68 is on the right of plane P6 on figures 3 and 4.

Angle $\alpha$ is smaller than angle $\beta$. Thus, a force F8 exerted on ball 6 by circlip 8 is directed towards ball groove 34, which helps blocking ball 6 within ball groove 34, without a risk of overpassing step 36. In other words, force F8 compresses ball 6 between circlip 8 and groove 34.

As shown on figure 3, diameter D61 crosses the raceway formed by ball groove 34 for balls 6 on ring 3, on the right of edge 38 on figure 3.

Advantageously, the respective values of angles $\alpha$ and $\beta$ are close to each other. The higher the ratio $\alpha/\beta$ is, the higher the maximum applicable load is reached. The maximum applicable load is the maximum load that can be applied on the bearing in a direction which presses circlip 8 against at least one of the balls, without separating the inner and outer rings from each other.

According to an alternative embodiment of the invention which is not represented, angles $\alpha$ and $\beta$ can be equal. In the sense of the present invention, angles $\alpha$ and $\beta$ are considered to be equal if their difference is less than 2°. Thus, in case of undocking of the inner and outer rings one with respect to the other, the ball 6 can skip over step 36 or over circlip 8. In case of an extremely intense axial effort exerted on outer ring 4, this ring can be deformed or even broken. This alternative embodiment allows to obtain the maximum admissible load. However, in case the outer ring is deformed or broken, bearing 1 is out of order.

According to still another embodiment of the invention which is not represented either, it is possible for angle $\alpha$ to be larger than angle $\beta$. In case of undocking, ball 6 skips over step 36. Such a solution is generally not advisable since step 36 is normally the best way to hold rings 3 and 4 together. However, such an alternative solution remains acceptable for some types of bearings, if the maximum applicable load remains high enough.

Irrespective of the three embodiments considered here-above, the respective values of angles $\alpha$ and $\beta$ are of the same order of magnitude, and preferably close to each other. The following equation is followed:

$$0,5 \leq \alpha/\beta \leq 1,2$$

Moreover, angles $\alpha$ and $\beta$ are preferably between 5° and 30°. In other words, the following equations are followed:

$$5° \leq \beta \leq 30°$$

On the other hand, D6 denotes the diameter of one ball 6, whereas D8 denotes the diameter of circlip 8. D60 denotes the outer diameter of the series of balls 6 and D80 denotes the inner diameter of circlip 8. Diameter D80 is chosen so that its difference with respect to diameter D60 is less than half of diameter D6. In other words, the following equation is followed:

In order to obtain an efficient blocking or wedging effect of circlip 8 within groove 44, the section of groove 44 is complementary or substantially complementary, that is complementary with some clearance, with respect to the portion of circlip 8 which is received within this groove.

During manufacturing of bearing 1, groove 44 is formed on surface 42, by stamping or machining. Later on, upon assembling of bearing 1, balls 6 are installed within raceway chamber 5. Then in a further step, circlip 8 is engaged into groove 44.

Alternatively, instead of a circlip, one can use a snap ring or an elastic washer made of plastic or metal. One can also use an O-ring or a seal made of a synthetic material.

The invention can also be used with a bearing whose inner and outer rings can have a swiveling movement one with respect to the other, in particular in order to accommodate a non-alignment of axis X3 and X4. In such a case, the inner and outer rings can pivot one with respect to the other, around a geometrical point which is common to axis X3 and X4, as considered in WO-A-2010/125027. In such a case, the member 8 can also come into contact with one or several of the balls 6 as a result of the swiveling movement of rings 3 and 4.

The invention has been represented in case the groove for the blocking member is made in the outer ring. According to a non represented alternative embodiment, such a groove can be made on the inner ring, the rest of the bearing being adapted consequently.

## Claims

1. A ball (1) bearing comprising:

   - an inner ring (3),
   - an outer ring (4),
   - at least one series of balls (6) located in a raceway chamber (5) defined between said inner and said outer rings

   wherein said bearing also comprises an annular blocking member (8) partly received in a groove (44) formed in a surface (42) of a first ring (4), amongst said inner and outer rings (3, 4), inside said raceway chamber (5), said blocking member being away (d8) from said balls under normal operating conditions (fig. 2) of said bearing and said blocking member coming into contact (P68) with at least some of said balls (6) when a wrenching force (F2), parallel to a rotation axis (X2, X3, X4) of said inner and outer rings one with respect to the other, is exerted on said inner and outer rings.

2. Bearing according to claim 1, wherein said groove (44) has a section complementary or substantially complementary to the outer shape of the part of said blocking member (8) which is received in said groove.

3. Bearing according to any preceding claim, wherein the second ring (3), amongst said inner and outer rings, has a raceway (34) for said balls (6) and, when said blocking element is in contact with one ball, a diameter (D61) of said ball crossing a contact point (P68) between said ball and said blocking member (8) also crosses said raceway.

4. Bearing according to any preceding claim, wherein when said blocking member (8) is in contact with a ball (6), a first angle ($\alpha$) defined between, on the one hand, a diameter (D61) of said ball passing through a contact point (P68) between said blocking member and said ball and, on the other hand, a median plane (P6) of the series of balls, is smaller than a second angle ($\beta$) defined between, on the one hand, said median plane (P6) and, on the other hand, a diameter (D62) of said ball passing on an edge (38) of a raceway (34) defined on the second ring (3), amongst said inner and outer rings (3, 4), for said balls.

5. Bearing according to one of the claims 1 to 3, wherein a first angle ($\alpha$) defined between, on the one hand, a diameter (D61) of said ball passing through a contact point (P68) between said blocking member and said ball and, on the other hand, a median plane (P6) of the series of balls, equals a second angle ($\beta$) defined between, on the one hand, said median plane (P6) and, on the other hand, a diameter (D62) of said ball passing on an edge (38) of a raceway (34) defined on the second ring (3), amongst said inner and outer rings (3, 4), for said balls.

6. Bearing according to any preceding claim wherein the ratio ($\alpha/\beta$) of:

   - a first angle ($\alpha$) defined between, on the one hand, a diameter (D61) of said ball passing through a contact point (P68) between said blocking member and said ball and, on the other hand, a median plane (P6) of the series of balls, and
   - a second angle ($\beta$) defined between, on the one hand, said median plane (P6) and, on the other hand, a diameter (D62) of said ball passing on an edge (38) of a raceway (34) defined on the second ring (3), amongst said inner and outer rings (3, 4), for said balls,
   is between 0,5 and 1,2.

7. Bearing according to any one of claims 4 to 6, wherein said first and second angles ($\alpha/\beta$) are each be-

tween 5° and 30°.

8. Bearing according to any preceding claim, wherein the difference (D60-D80) between

 - the outer diameter (D60) of said series of balls (6) and
 - the inner diameter (D80) of said blocking member (8)

 is less than half of the diameter (D6) of said balls.

9. Bearing according to any preceding claim, wherein, when said blocking member (8) is in contact with a ball (6), the sum of

 - a first clearance (b1) between said ball (56) and a corresponding raceway forming ball groove (34) of a second ring (3), amongst said inner and outer rings, at the level of a median plane (P6) of said series of balls and
 - a second clearance (b2) between said ball and a raceway forming surface (42) of said first ring (4), at the level of said median plan (P6) is smaller than a radial height (H1) of said ball groove (34) at the level of said median plane (P6).

10. Bearing according to any preceding claim, wherein, when said blocking member (8) is in contact with a ball (6), the sum of

 - a first clearance (b1) between said ball (56) and a corresponding raceway forming ball groove (34) of a second ring (3), amongst said inner and outer rings, at the level of a median plane (P6) of said series of balls and
 - a second clearance (b2) between said ball and a raceway forming surface (42) of said first ring (4), at the level of said median plan (P6) is smaller than a radial distance (d2) between, on the one hand, a contact point (P68) of said blocking member (8) and said ball (6) and, on the other hand, said raceway forming surface (42) of said first ring (4) at the level of said median plane (P6).

11. Bearing according to any preceding claim, wherein said blocking member (8) is a circlip a snap ring, an elastic washer, an O-ring or a seal.

12. Bearing according to any preceding claim, wherein said blocking member (8) is metallic.

13. Bearing according to any of claims 1 to 11, wherein said blocking member (8) is made of a synthetic material.

14. Bearing according to any preceding claim, wherein said inner ring (3) and said outer ring (4) are mounted with freedom to pivot angularly about a point common to the axes of symmetry (X3, X4) of said rings and said blocking member (8) is adapted to come into contact with at least one of said balls (6) via an angular pivoting movement of said rings, one with respect to the other.

15. Bearing according to any preceding claim, wherein it includes a sealing gasket (9) mounted on one (4) of said rings and extending up to the vicinity of, or in sliding contact with, the other ring (3), said sealing gasket isolating the raceway chamber (5) from the outside and said blocking member (8) being located between said series of balls (6) and said sealing gasket, along the axis of symmetry (X4) of said first ring.

16. A clutch thrust bearing device comprising a drive element (2) and a bearing (1) according to one of the previous claims.

17. A motor vehicle fitted with a bearing (1) according to any one of the claims 1 to 15 or with a clutch thrust bearing device (1, 2) according to claim 16.

18. A process for manufacturing a bearing according to one of claims 1 to 15 or a clutch thrust bearing device (1, 2) according to claim 16, wherein said groove (44) is formed on said surface (42) of said first ring (4) by stamping or machining.

19. A process for manufacturing a bearing according to one of claims 1 to 15 or a clutch thrust bearing device according to claim 16, wherein said balls (6) are installed within said raceway chamber (5) before said blocking member (8) is engaged into said groove (44).

*Fig.1*

*Fig.2*

Fig.3

Fig.4

Europäisches
Patentamt
European
Patent Office
Office européen
des brevets

# EUROPEAN SEARCH REPORT

**Application Number**

EP 11 30 5498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 816 383 A1 (ROULEMENTS SOC NOUVELLE [FR]) 10 May 2002 (2002-05-10) | 1-4, 6-13, 15-19 | INV. F16C19/16 F16C33/58 |
| Y | * page 1, lines 1-3, 24-26 * <br> * page 1, line 27 - page 2, line 9 * <br> * page 2, lines 15-19 * <br> * page 3, lines 6-10 * <br> * page 5, lines 3-28 * <br> * page 6, lines 17-20 * <br> * page 7, line 24 - page 8, line 11 * <br> * page 8, line 29 - page 9, line 2 * <br> * figures 1-4 * | 14 | ADD. F16C41/04 |
| X | DE 10 2008 030223 A1 (SCHAEFFLER KG [DE]) 31 December 2009 (2009-12-31) <br><br> * paragraphs [0006], [0021] - [0025] * <br> * sentences 1-9, paragraph 10 * <br> * sentences 1-16, paragraph 14 * <br> * sentences 1-8, paragraph 15 * <br> * figures 1-4 * | 1-3,5,6, 8-12,15, 17-19 | |
| X | US 2009/034895 A1 (ZLIPKO MARK [CA] ET AL) 5 February 2009 (2009-02-05) <br><br> * sentences 6-26, paragraph 13 * <br> * figures 3, 4 * | 1-3, 8-12,18, 19 | TECHNICAL FIELDS SEARCHED (IPC) <br><br> F16C <br> F16D |
| X | GB 1 271 066 A (POZNANSKA FABRYKA LOZYSK TOCZN [PL]) 19 April 1972 (1972-04-19) | 1,2,11, 12,15 | |
| A | * page 1, lines 42-49, 70-79 * <br> * page 2, lines 14-21,38-42, 43-46, 54-60 * <br><br> * figures 5, 6 * | 14 | |

-/--

The present search report has been drawn up for all claims

| Place of search | Date of completion of the search | Examiner |
|---|---|---|
| The Hague | 31 August 2011 | Dumont, Marie-Laure |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 11 30 5498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/008087 A1 (MYONIC GMBH [DE]; BOECK BERNHARD [DE]; ENGLER MARTIN [DE]; MOESLE PETE) 27 January 2005 (2005-01-27)<br>* page 1, lines 1-7 *<br>* page 2, lines 19-26 *<br>* page 3, lines 5-13,33-36 *<br>* page 4, lines 6-15, 28-34 *<br>* page 9, line 10 - page 10, line 13 *<br>* page 10, line 26 - page 11, line 13 *<br>* figures 3-5, 7-9 *<br>----- | 1,2, 9-13,15, 19 | |
| Y<br><br><br>A | WO 2008/107289 A1 (SCHAEFFLER KG [DE]; DITTMER STEFFEN [DE]; MITTENDORF GERHARD [DE]; WIN) 12 September 2008 (2008-09-12)<br>* page 7, line 29 - page 8, line 9 *<br>* figure 1 *<br>----- | 14<br><br><br>1,16,17 | |

TECHNICAL FIELDS
SEARCHED      (IPC)

The present search report has been drawn up for all claims

| Place of search | Date of completion of the search | Examiner |
|---|---|---|
| The Hague | 31 August 2011 | Dumont, Marie-Laure |

EPO FORM 1503 03.82 (P04C01)

## ANNEX TO THE EUROPEAN SEARCH REPORT
## ON EUROPEAN PATENT APPLICATION NO.

EP 11 30 5498

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2011

| Patent document cited in search report | | Publication date | Patent family member(s) | | Publication date |
|---|---|---|---|---|---|
| FR 2816383 | A1 | 10-05-2002 | NONE | | |
| DE 102008030223 | A1 | 31-12-2009 | NONE | | |
| US 2009034895 | A1 | 05-02-2009 | CA | 2603390 A1 | 12-01-2009 |
| GB 1271066 | A | 19-04-1972 | AT | 301277 B | 25-08-1972 |
| | | | BE | 745252 A1 | 01-07-1970 |
| | | | CA | 957002 A1 | 29-10-1974 |
| | | | CH | 520282 A | 15-03-1972 |
| | | | CS | 180560 B2 | 31-01-1978 |
| | | | DE | 2004570 A1 | 27-08-1970 |
| | | | FR | 2032659 A5 | 27-11-1970 |
| | | | IL | 33779 A | 30-06-1974 |
| | | | NL | 7001678 A | 10-08-1970 |
| | | | PL | 68444 A5 | 28-02-1973 |
| | | | RO | 55865 A1 | 03-01-1974 |
| | | | SE | 7405077 A | 16-04-1974 |
| | | | YU | 30270 A | 30-06-1976 |
| WO 2005008087 | A1 | 27-01-2005 | DE | 10328757 A1 | 20-01-2005 |
| WO 2008107289 | A1 | 12-09-2008 | DE 102007010935 A1 | | 11-09-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010125027 A